# EUROPEAN PATENT APPLICATION

(11) **EP 3 592 052 A1**
(43) Date of publication of application: **08.01.2020**
(21) Application number: 18771450.6
(22) Date of filing: 09.03.2018
(51) Int. Cl.: H04W 56/00

(54) **UPLINK TRANSMISSION METHOD AND DEVICE**

(30) Priority: 21.03.2017 CN 201710168847
(71) Applicant: Huawei Technologies Co., Ltd., Longgang District Shenzhen, Guangdong 518129 (CN)
(72) Inventor: HUANG, Qufang, Shenzhen Guangdong 518129 (CN); LIU, Xing, Shenzhen Guangdong 518129 (CN)
(74) Representative: Maiwald Patent- und Rechtsanwaltsgesellschaft mbH
(86) International application number: PCT/CN2018/078620
(87) International publication number: WO 2018/171448

(57) **Abstract**

Embodiments of the present invention provide an uplink transmission method and an apparatus, and relate to the field of communication technologies, to increase a probability of correctly receiving uplink data by a radio access device when UE performs uplink transmission by using a grant-free resource. The method includes the following steps: UE determines to perform uplink transmission by using a grant-free resource; when first TA stored in the UE is invalid, the UE may update the currently stored first TA to preset second TA; and the UE continues to perform the current uplink transmission on the grant-free resource by using the second TA.

## Description

This application claims priority to Chinese Patent Application No. 201710168847.4, filed with the Chinese Patent Office on March 21, 2017 and entitled "UPLINK TRANSMISSION METHOD AND APPARATUS", which is incorporated herein by reference in its entirety.

### TECHNICAL FIELD

Embodiments of the present invention relate to the field of communications technologies, and in particular, to an uplink transmission method and an apparatus.

### BACKGROUND

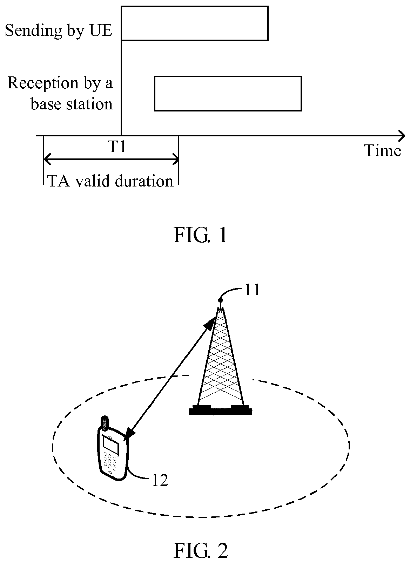

In a long term evolution (long term evolution, LTE) system, before performing uplink transmission, each user equipment (user equipment, UE) in a cell first needs to obtain a radio resource (referred to as a scheduling resource in embodiments of the present invention) dynamically allocated by a base station to the UE. Further, as shown in FIG. 1, the UE may determine, based on currently used timing advance (timing advance, TA), a start time T1 for sending an uplink subframe to the base station. Valid duration of the TA is specific in each uplink transmission process. Therefore, when the moment T1 arrives, if the TA is still valid, the UE may use the scheduling resource to send the uplink subframe to the base station to implement current uplink transmission; if the TA is already invalid, and the UE still uses the scheduling resource to send the uplink subframe, the base station may not correctly receive the uplink subframe. Therefore, if the TA is already invalid, the UE cancels the current uplink transmission.

In a new radio (new radio, NR) system, a radio access device (for example, a base station) may pre-allocate some grant-free radio resources (namely, grant free resources, referred to as grant-free resources in the embodiments of the present invention) to a plurality of UEs. When one of the plurality of UEs needs to perform uplink transmission, but has not obtained, for a long time, the scheduling resource allocated by the base station, the UE may be allowed to use the grant-free resource to perform the uplink transmission.

However, when the UE has not obtained, for a long time, the scheduling resource allocated by the base station, the TAused by the UE may probably already expire. In this case, if an uplink transmission solution in the LTE system is still used, the UE needs to cancel the current uplink transmission, and consequently the base station cannot receive uplink data sent by using the grant-free resource.

### SUMMARY

Embodiments of the present invention provide an uplink transmission method and an apparatus, to increase a probability of correctly receiving uplink data by a radio access device when UE performs uplink transmission by using a grant-free resource.

To achieve the foregoing objective, the embodiments of the present invention use the following technical solutions:
According to a first aspect, an embodiment of the present invention provides an uplink transmission method, including the following steps: UE determines to perform uplink transmission by using a grant-free resource; when first TA stored in the UE is invalid, the UE may update the currently stored first TA to preset second TA; and further, the UE continues to perform the current uplink transmission on the grant-free resource by using the second TA, thereby increasing a probability of correctly receiving uplink data by a radio access device when the UE performs the uplink transmission by using the grant-free resource.

In a possible design method, the second TA is equal to 0.

In a possible design method, the method further includes the following steps: When the first TA stored in the UE is valid, the UE performs the uplink transmission on the grant-free resource by using the first TA; or when the first TA stored in the UE is valid, the UE may perform the uplink transmission on the grant-free resource also by using the second TA.

In a possible design method, the method further includes: receiving, by the UE, first indication information sent by a radio access device, where the first indication information is used to indicate a correspondence between an identifier of the UE and a TA offset, and a quantity of bits occupied by the TA offset is greater than or equal to 6; and updating, by the UE, the currently stored second TA to third TA based on the TA offset. The quantity of bits occupied by the TA offset is greater than or equal to 6. Therefore, during offsetting based on the TA offset, an adjusted offset can reach at least 128 (namely, 2 raised to the power of 7). In this way, the radio access device may make, at a time, a large adjustment to the TA stored in the UE.

The UE is in a third mode, and the third mode is any mode other than an idle mode and a connected mode. In this case, the identifier of the UE is a third-mode identifier when the UE is in the third mode.

In a possible design method, the identifier of the UE is carried on a PDCCH, and the TA offset is carried on a PDSCH. To be specific, DCI is scrambled on the PDCCH by using a resume ID of the UE instead of a C-RNTI of the UE, and the TA offset that occupies six or more bits is carried on the PDSCH and sent to the UE. Alternatively, both the identifier of the UE and the TA offset are carried on the PDSCH, and in this way, the radio access device may send TA offsets corresponding to the plurality of UEs to a plurality of UEs at a time.

In a possible design method, the method further includes: determining, by the UE, that a first TAT configuration parameter is currently stored, where the first TAT configuration parameter is used to indicate valid duration of currently stored TA; and configuring, by the UE, first TA valid duration based on the first TAT configuration parameter, where the currently stored TA is valid in the first TA valid duration.

In a possible design method, the method further includes: determining, by the UE, that a first TAT configuration parameter is not currently stored, where the first TAT configuration parameter is used to indicate valid duration of currently stored TA; and configuring, by the UE, second TA valid duration with an infinite time length, where the currently stored TA is valid in the second TA valid duration. Therefore, when the UE is in the third mode, the UE may still obtain TA valid duration, so that the UE in the third mode performs the uplink transmission in the corresponding TA valid duration.

In a possible design method, the method further includes: when the UE exits the third mode, setting, by the UE, that the second TA valid duration ends.

In a possible design method, the method further includes the following step: When TA stored in the UE is valid, the UE may directly send a connection setup request to the radio access device without a need to initiate random access to the first radio access device, to set up a connection to the radio access device, thereby reducing a probability of performing random access by the UE and reducing a conflict caused by simultaneous initiating random access by a plurality of UEs.

In a possible design method, after the UE sends the connection setup request to the radio access device to set up a connection to the radio access device, the method further includes: receiving, by the UE, a second TAT configuration parameter that is configured by the radio access device for the UE; receiving, by the UE, second indication information sent by the radio access device, where the second indication information is used to instruct the UE to update the currently stored TA to fourth TA; and configuring, by the UE, third TA valid duration based on the second TAT configuration parameter, where the fourth TA is valid in the third TA valid duration.

In this way, the configured TA valid duration does not end from a time when the UE exits the third mode to a time when the UE in the connected mode receives a new TA command. In this case, if the UE needs to perform the uplink transmission during this period of time, the UE may further implement the uplink transmission by using the TA valid duration configured for the UE in the third mode, thereby achieving continuous transmission of uplink data by the UE in different modes.

According to a second aspect, an embodiment of the present invention provides an uplink transmission method, including: determining, by a radio access device, first indication information for UE, where the first indication information is used to indicate a correspondence between an identifier of the UE and a TA offset, and a quantity of bits occupied by the TA offset is greater than or equal to 6; and sending, by the radio access device, the first indication information to the UE.

In a possible design method, the UE is in a third mode, the third mode is any mode other than an idle mode and a connected mode, and the identifier of the UE is a third-mode identifier when the UE is in the third mode. The identifier of the UE is carried on a PDCCH, and the TA offset is carried on a PDSCH; or both the identifier of the UE and the TA offset are carried on a PDSCH.

In a possible design method, after a connection between the radio access device and the UE is set up, the method further includes: sending, by the radio access device, a TAT configuration parameter to the UE, where the TAT configuration parameter is used to instruct the UE to configure TA valid duration based on the TAT configuration parameter; and sending, by the radio access device, second indication information to the UE, where the second indication information is used to instruct the UE to update stored TA, and the updated TA is valid in the TA valid duration.

In a possible design method, the radio access device sends candidate TA to the UE, where the candidate TA is used to instruct the UE to perform uplink transmission on a grant-free resource by using the candidate TA when the TA stored in the UE is invalid.

According to a third aspect, an embodiment of the present invention provides UE, including: a determining unit, configured to determine to perform uplink transmission by using a grant-free resource; an updating unit, configured to: when first TA stored in the UE is invalid, update the currently stored first TA to preset second TA; and a transmission unit, configured to perform the uplink transmission on the grant-free resource by using the second TA.

In a possible design method, the transmission unit is further configured to: when the first TA stored in the UE is valid, perform the uplink transmission on the grant-free resource by using the first TA, or when the first TA stored in the UE is valid, perform the uplink transmission on the grant-free resource by using the second TA.

In a possible design method, the transmission unit is further configured to receive first indication information sent by a radio access device, where the first indication information is used to indicate a correspondence between an identifier of the UE and a TA offset, and a quantity of bits occupied by the TA offset is greater than or equal to 6; and the updating unit is further configured to update the currently stored second TA to third TA based on the TA offset.

In a possible design method, the UE is in a third mode, the third mode is any mode other than an idle mode and a connected mode, and the identifier of the UE is a third-mode identifier when the UE is in the third mode. The identifier of the UE is carried on a PDCCH, and the TA offset is carried on a PDSCH; or both the identifier of the UE and the TA offset are carried on a PDSCH.

In a possible design method, the UE further includes a configuration unit, where the determining unit is further configured to determine that a first TAT configuration parameter is currently stored, where the first TAT configuration parameter is used to indicate valid duration of currently stored TA; and the configuration unit is configured to configure first TA valid duration based on the first TAT configuration parameter, where the currently stored TA is valid in the first TA valid duration.

In a possible design method, the UE further includes a configuration unit, where the determining unit is further configured to determine that a first TAT configuration parameter is not currently stored, where the first TAT configuration parameter is used to indicate valid duration of currently stored TA; and the configuration unit is configured to configure second TA valid duration with an infinite time length, where the currently stored TA is valid in the second TA valid duration.

In a possible design method, the configuration unit is further configured to: when the UE exits the third mode, set that the second TA valid duration ends.

In a possible design method, the transmission unit is further configured to: when TA stored in the UE is valid, send a connection setup request to the radio access device instead of performing random access, where the connection setup request is used to request to set up a connection between the UE and the radio access device.

In a possible design method, the transmission unit is further configured to: receive a second TAT configuration parameter that is configured by the radio access device for the UE, and receive second indication information sent by the radio access device, where the second indication information is used to instruct the UE to update the currently stored TA to fourth TA; and the updating unit is further configured to configure third TA valid duration based on the second TAT configuration parameter, where the fourth TA is valid in the third TA valid duration.

According to a fourth aspect, an embodiment of the present invention provides a radio access device, including: a determining unit, configured to determine first indication information for UE, where the first indication information is used to indicate a correspondence between an identifier of the UE and a TA offset, and a quantity of bits occupied by the TA offset is greater than or equal to 6; and a sending unit, configured to send the first indication information to the UE.

In a possible design method, the UE is in a third mode, the third mode is any mode other than an idle mode and a connected mode, and the identifier of the UE is a third-mode identifier when the UE is in the third mode. The identifier of the UE is carried on a physical downlink control channel PDCCH, and the TA offset is carried on a physical downlink shared channel PDSCH; or both the identifier of the UE and the TA offset are carried on a PDSCH.

In a possible design method, the sending unit is further configured to: send a TAT configuration parameter to the UE, where the TAT configuration parameter is used to instruct the UE to configure TA valid duration based on the TAT configuration parameter; and send second indication information to the UE, where the second indication information is used to instruct the UE to update stored TA, and the updated TA is valid in the TA valid duration.

In a possible design method, the sending unit is further configured to send candidate TA to the UE, where the candidate TA is used to instruct the UE to perform uplink transmission on a grant-free resource by using the candidate TA when the TA stored in the UE is invalid.

According to a fifth aspect, an embodiment of the present invention provides UE, including a processor, a memory, a bus, and a communications interface, where the memory is configured to store a computer executable instruction, the processor is connected to the memory by using the bus, and when the UE runs, the processor executes the computer executable instruction stored in the memory, so that the UE performs any one of the foregoing uplink transmission methods.

According to a sixth aspect, an embodiment of the present invention provides a radio access device, including a processor, a memory, a bus, and a communications interface, where the memory is configured to store a computer executable instruction, the processor is connected to the memory by using the bus, and when the radio access device runs, the processor executes the computer executable instruction stored in the memory, so that the radio access device performs any one of the foregoing uplink transmission methods.

According to a seventh aspect, an embodiment of the present invention provides a computer readable storage medium, where the computer readable storage medium stores an instruction, and when the instruction runs on any one of the foregoing UEs, the UE performs any one of the foregoing uplink transmission methods.

According to an eighth aspect, an embodiment of the present invention provides a computer readable storage medium, where the computer readable storage medium stores an instruction, and when the instruction runs on any one of the foregoing radio access devices, the radio access device performs any one of the foregoing uplink transmission methods.

According to a ninth aspect, an embodiment of the present invention provides a computer program product including an instruction, where when the computer program product runs on any one of the foregoing UEs, the UE performs any one of the foregoing uplink transmission methods.

According to a tenth aspect, an embodiment of the present invention provides a computer program product including an instruction, where when the computer program product runs on any one of the foregoing radio access devices, the radio access device performs any one of the foregoing uplink transmission methods.

In the embodiments of the present invention, names of the UE and the radio access device do not constitute a limitation on the devices. In actual implementation, these devices may have other names. Provided that functions of the devices are similar to those in the embodiments of the present invention, the devices fall within the scope defined by the claims of the present invention and their equivalent technologies.

In addition, for a technical effect brought by any design manner of the second aspect to the tenth aspect, refer to the technical effects brought by different design methods in the foregoing first aspect. Details are not described herein again.

### BRIEF DESCRIPTION OF DRAWINGS

FIG. 1 is a schematic diagram of an application scenario of TA valid duration in the prior art;
FIG. 2 is a schematic system architectural diagram of an uplink transmission system according to an embodiment of the present invention;
FIG. 3 is a schematic structural diagram 1 of UE according to an embodiment of the present invention;
FIG. 4 is a schematic structural diagram 1 of a radio access device according to an embodiment of the present invention;
FIG. 5 is a schematic flowchart of an uplink transmission method according to an embodiment of the present invention;
FIG. 6 is a schematic structural diagram of a TA command in the prior art;
FIG. 7 is a schematic structural diagram 1 of a TA command according to an embodiment of the present invention;
FIG. 8 is a schematic structural diagram 2 of a TA command according to an embodiment of the present invention;
FIG. 9 is a schematic diagram 1 of a method for setting TA valid duration according to an embodiment of the present invention;
FIG. 10 is a schematic diagram 2 of a method for setting TA valid duration according to an embodiment of the present invention;
FIG. 11 is a schematic structural diagram 2 of UE according to an embodiment of the present invention;
FIG. 12 is a schematic structural diagram 2 of a radio access device according to an embodiment of the present invention; and
FIG. 13 is a schematic structural diagram of UE (or a radio access device) according to an embodiment of the present invention.

### DESCRIPTION OF EMBODIMENTS

The term "first" or "second" mentioned below is merely used for description, and shall not be understood as an indication or implication of relative importance or implicit indication of a quantity of indicated technical features. Therefore, a feature limited by "first" or "second" may explicitly or implicitly include one or more features. In the description of the embodiments of the present invention, unless otherwise stated, "a plurality of' means two or more than two.

Embodiments of the present invention provide an uplink transmission method, and the method can be applied to an uplink transmission system shown in FIG. 2. The system includes a radio access device 11 and at least one user equipment 12.

The user equipment (user equipment, UE) 11 may also be referred to as a terminal, and may be specifically a mobile phone, a tablet computer, a notebook computer, a UMPC (Ultra-mobile Personal Computer, ultra-mobile personal computer), a netbook, a PDA (Personal Digital Assistant, personal digital assistant), or the like. This is not limited in the embodiments of the present invention.

The radio access device 12 may be an AP (Access Point, radio access point) or a base station (for example, a macro base station, a micro base station, or a repeater). This is not limited in the embodiments of the present invention.

In addition, a transmission time unit in the embodiments of the present invention may be specifically an uplink transmission time unit or a downlink transmission time unit. The uplink transmission time unit is a time granularity for uplink transmission and the downlink transmission time unit is a time granularity for downlink transmission. The transmission time unit may be specifically a subframe, a symbol (symbol), a slot (slot), a mini-slot, an aggregated slot, an aggregated mini-slot, or the like. A subframe is used as an example. In an LTE system, a time length of one subframe is usually 1 ms, and in a 5G (5th-Generation, 5th generation mobile communications system) NR system, a time length of one subframe may be set by a radio access device. This is not limited in the embodiments of the present invention.

Specifically, the UE starts a timing advance timer (timing advance timer, TAT) in each uplink transmission process. TA stored in the UE is valid only in a timing period of the TAT. When the TA is valid, the UE may determine a start time of the uplink transmission time unit based on the TA, and perform current uplink transmission when the start time arrives. When the TA is invalid, the UE needs to cancel current uplink transmission.

However, when the UE performs the current uplink transmission by using a grant-free resource pre-allocated by the radio access device, the started TAT usually already expires, in other words, the currently stored TA is invalid, and the UE needs to cancel the current uplink transmission. Consequently, the radio access device cannot receive uplink data sent by the UE by using the grant-free resource.

In view of this, according to the uplink transmission method provided in the embodiments of the present invention, when the UE determines to perform the current uplink transmission by using the grant-free resource pre-allocated by the radio access device, the UE may determine, based on a timing status of a current TAT, whether the currently stored TA (for example, first TA) is valid. If the current TAT already expires, it indicates that the first TA is already invalid. The UE may update the currently stored first TA to preset second TA (for example, the second TA is a fixed value greater than or equal to 0), and subsequently, the UE may continue to perform the current uplink transmission on the grant-free resource by using the second TA, thereby increasing a probability of correctly receiving uplink data by the radio access device when the UE performs the uplink transmission by using the grant-free resource.

The second TA may be pre-obtained by the UE from the radio access device, or may be a fixed value preset in the UE according to a protocol standard. This is not limited in this embodiment of the present invention.

Optionally, the second TA may be 0.

Certainly, if the UE determines to perform the current uplink transmission by using the grant-free resource, and the current TAT does not expire, in other words, the first TA currently stored in the UE is valid, the UE may perform the current uplink transmission on the grant-free resource still by using the first TA.

Alternatively, if the UE determines to perform the current uplink transmission by using the grant-free resource, even if the current TAT does not expire, the UE may perform the current uplink transmission also by using the second TA. In other words, when the UE determines to perform the current uplink transmission by using the grant-free resource, regardless of whether the currently stored TA is valid, the UE can perform the current uplink transmission by using a fixed value, namely, the second TA, thereby increasing a probability of correctly receiving uplink data by the radio access device.

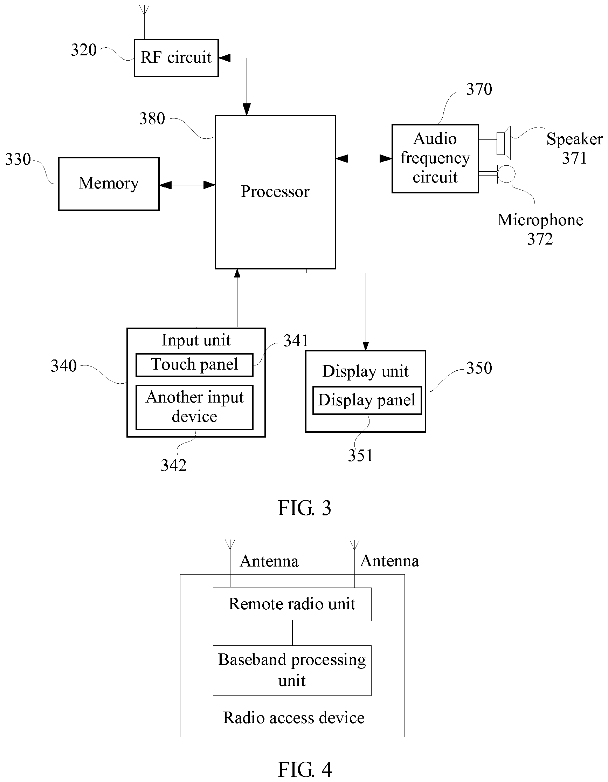

For a hardware structure of the UE in the embodiments of the present invention, refer to constituent components of UE shown in FIG. 3.

As shown in FIG. 3, the UE may specifically include components such as a radio frequency (radio frequency, RF radio frequency) circuit 320, a memory 330, an input unit 340, a display unit 350, a gravity sensor 360, an audio circuit 370, a processor 380, and a power supply 390. A person skilled in the art may understand that a structure of the UE shown in FIG. 3 constitutes no limitation on the UE, and may include more or fewer components than those shown in the figure, or combine some components, or have a different component arrangement.

The following describes each constituent component of the UE in detail with reference to FIG. 3:
The RF circuit 320 may be configured to receive and send a signal in an information receiving and sending process or a call process. In particular, after receiving downlink information of a radio access device, the RF circuit 320 sends the downlink information to the processor 380 for processing; and sends uplink data to the radio access device. Usually, the RF circuit includes but is not limited to an antenna, at least one amplifier, a transceiver, a coupler, a low noise amplifier (low noise amplifier, LNA), a duplexer, and the like. In addition, the RF circuit 320 may further communicate with a network and another device through wireless communication.

The memory 330 may be configured to store a software program and a module, and the processor 380 performs various function applications and data processing of the UE by running the software program and the module stored in the memory 330.

The input unit 340 may be configured to: receive input digit or character information, and generate a key signal input related to a user setting and function control of the UE. Specifically, the input unit 340 may include a touch panel 341 and another input device 342.

The display unit 350 may be configured to display information entered by a user or information provided for a user and various menus of the UE. The display unit 350 may include a display panel 351. Optionally, the display panel 351 may be configured in a form of a liquid crystal display (liquid crystal display, LCD), an organic light-emitting diode (organic light-emitting diode, OLED), or the like.

The UE may further include the gravity sensor (gravity sensor) 360 and other sensors such as an optical sensor, a gyroscope, a barometer, a hygrometer, a thermometer, and an infrared sensor. Details are not described herein.

The audio circuit 370, a speaker 371, and a microphone 372 may provide an audio interface between the user and the UE. The audio circuit 370 may transmit, to the speaker 371, an electrical signal converted from received audio data, and then the speaker 371 converts the electrical signal into a sound signal and outputs the sound signal. Conversely, the microphone 372 converts a collected sound signal into an electrical signal, and the audio circuit 370 receives the electrical signal and converts the electrical signal into audio data, and then outputs the audio data to the RF circuit 320, to send the audio data to, for example, another UE, or output the audio data to the memory 330 for further processing.

The processor 380 is a control center of the UE, and is connected to various parts of the entire UE through various interfaces and lines, and performs various functions and data processing of the UE by running or executing the software program and/or the module stored in the memory 330 and invoking data stored in the memory 330, to perform overall monitoring on the UE. Optionally, the processor 380 may include one or more processing units.

The UE may further include a power supply, a WiFi (wireless fidelity, wireless fidelity) module, a bluetooth module, and the like, which are not shown though. Details are not described herein.

For a hardware structure of the radio access device in the embodiments of the present invention, refer to FIG. 4.

As shown in FIG. 4, a radio access device includes a baseband processing unit (base band unit, BBU), a remote radio unit (radio remote unit, RRU), and an antenna. The BBU and the RRU may be connected through a fiber, and the RRU is connected to the antenna through a coaxial cable and a power splitter (a coupler). Usually, one BBU may be connected to a plurality of RRUs.

The RRU may include four modules: a digital intermediate frequency module, a transceiver module, a power amplification module, and a filtering module. The digital intermediate frequency module is used for modulation and demodulation in optical transmission, digital up- and down-frequency conversion, digital-to-analog conversion, and the like. The transceiver module implements conversion from an intermediate frequency signal to a radio frequency signal, and transmits, through the antenna, the radio frequency signal obtained after amplification performed by the power amplification module and filtering performed by the filtering module.

The BBU is configured to implement baseband processing functions (for example, coding, multiplexing, modulation, and spreading) of a Uu interface (namely, an interface between the UE and the radio access device), an interface function of a logical interface between a radio network controller (radio network controller, RNC) and the radio access device, signaling processing, local and remote operation and maintenance functions, operating status monitoring and alarm information reporting functions of the radio access device, and the like.

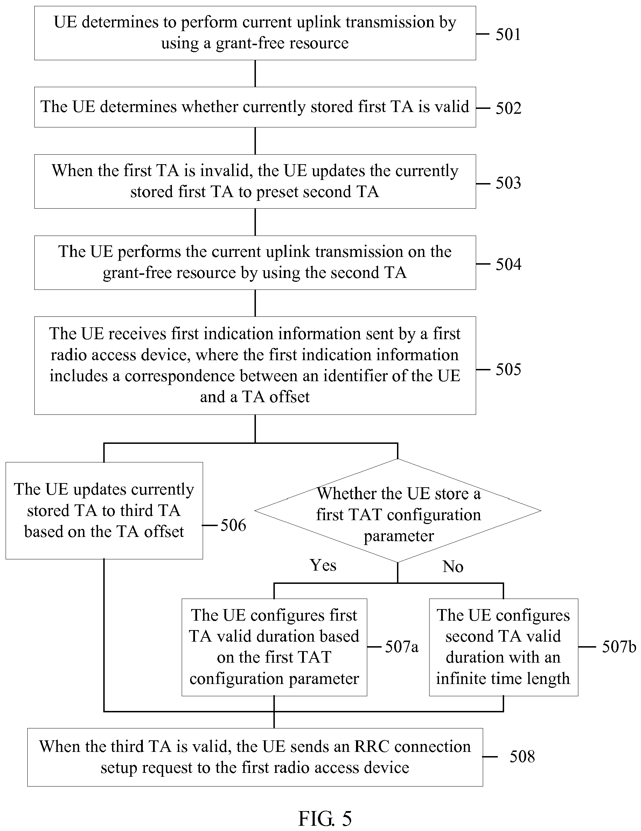

The following describes in detail an uplink transmission method according to an embodiment of the present invention with reference to a specific embodiment. As shown in FIG. 5, the method includes the following steps.

501. UE determines to perform current uplink transmission by using a grant-free resource.

For example, when the UE needs to send uplink data to a radio access device, if the UE does not obtain, within a preset time, a scheduling resource allocated by the radio access device to the UE, the UE may determine to perform the current uplink transmission by using a grant-free (grant free) resource pre-allocated by the radio access device.

502. The UE determines whether currently stored first TA is valid.

503. When the first TA is invalid, the UE updates the currently stored first TA to preset second TA.

Specifically, the radio access device periodically or aperiodically sends a TA command (TA command) to the UE, and the TA command may directly carry a specific value of to-be-updated-to TA of the UE. In this case, the UE may directly update the currently stored TA to the TA, for example, the first TA, carried in the TA command. Alternatively, the TA command may carry a TA offset, and then the UE adjusts the currently stored TA based on the TA offset, to obtain the first TA. This is not limited in this embodiment of the present invention.

In addition, after receiving the TA command, the UE is triggered to start timing. For example, the UE may start a TAT. The first TA is valid in a timing period of the TAT.

Specifically, in step 502, when performing the current uplink transmission by using the grant-free resource, the UE may determine, based on a timing status of the TAT, whether the currently stored first TA is valid. If the TAT does not expire, it indicates that the currently stored first TA is valid. Correspondingly, if the TAT expires, the currently stored first TA is invalid.

In this way, in step 503, when the first TA is invalid, the UE may update the currently stored first TA to the preset second TA, and the second TA is greater than or equal to 0.

For example, the UE may update the currently stored first TA to 0. In other words, the second TA is 0.

504. The UE performs the current uplink transmission on the grant-free resource by using the second TA.

In this way, in step 504, when the TA currently stored in the UE is invalid, the UE may still perform the current uplink transmission on the grant-free resource based on the updated second TA instead of canceling the current uplink transmission, thereby increasing a probability of correctly receiving uplink data by the radio access device on the grant-free resource.

Subsequently, after the radio access device obtains, through the current uplink transmission, the uplink data sent by the UE, the radio access device may reallocate a scheduling resource to the UE and deliver a new TA command. In this way, the UE may perform subsequent uplink transmission on the scheduling resource based on TA indicated in the new TA command.

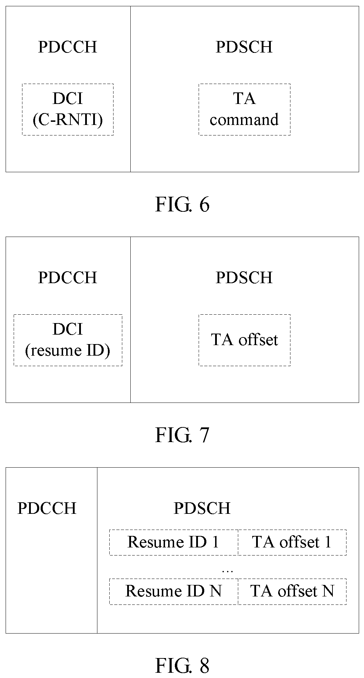

When delivering the TA command to the UE, as shown in FIG. 6, the radio access device needs to scramble downlink control information (DCI, downlink control information) on a physical downlink control channel (physical downlink control channel, PDCCH) by using a cell radio network temporary identifier (C-RNTI, cell radio network temporary identifier) of the UE, and add the TA command to a physical downlink shared channel (physical downlink shared channel, PDSCH) to send the TA command to the UE.

In this case, the TA command is specifically a TA offset that occupies 6 bits, and subsequently, the UE may perform offsetting on the basis of a currently stored TA based on the TA offset, to obtain updated TA.

However, in this case, the UE may be in a third mode other than an idle (idle) mode and a connected (connected) mode. For example, a context of the UE may be stored in an anchor radio access device of a current cell, but a connection, for example, a radio resource control (radio resource control, RRC) connection, is not set up between the UE and the anchor radio access device.

When the UE is in the third mode, the UE has no valid C-RNTI. Therefore, in order that the UE in the third mode can receive the TA command sent by the radio access device to implement subsequent uplink transmission, the UE may continue to perform the following steps 505 to 507.

505. The UE receives first indication information sent by a first radio access device, where the first indication information includes a correspondence between an identifier of the UE and a TA offset, and a quantity of bits occupied by the TA offset is greater than or equal to 6.

The first radio access device may be any radio access device in the cell in which the UE is currently located.

In this case, the identifier of the UE may be a third-mode identifier when the UE is in the third mode, for example, a resume ID of the UE.

In a possible design method, as shown in FIG. 7, the first radio access device may scramble the DCI on the PDCCH by using the resume ID of the UE instead of the C-RNTI of the UE, and add the TA offset that occupies 6 bits or more than 6 bits to the PDSCH to send the TA offset to the UE. In this way, the UE may determine a corresponding TA offset based on the resume ID of the UE and then perform offsetting on the basis of the currently stored TA (for example, the first TA or the second TA) based on the TA offset, to obtain updated third TA.

The quantity of bits occupied by the TA offset is greater than or equal to 6, for example, the quantity of bits occupied by the TA offset is 7. In this case, during offsetting based on the TA offset, a maximum offset can reach 128 (namely, 2 raised to the power of 7). Compared with the TA command that occupies six bits (2 raised to the power of 6 is 64), the TA adjustment method provided in this embodiment of the present invention may make, at a time, a large adjustment to the TA stored in the UE.

In another possible design method, as shown in FIG. 8, the first radio access device may directly add a correspondence between a resume ID of UE and a TA offset to a preset area of the PDSCH. In this way, the first radio access device may send, to N (N > 0) UEs at a time, TA offsets corresponding to the N UEs. Similarly, the quantity of bits occupied by the TA offset is greater than or equal to 6.

Further, after the UE receives the first indication information, the following steps 506 and 507 (step 507 includes 507a and 507b) may be triggered simultaneously.

506. The UE updates a currently stored TA to third TA based on the TA offset.

507a. When a first TAT configuration parameter is stored in the UE, the UE configures first TA valid duration based on the first TAT configuration parameter, where the currently stored third TA is valid in the first TA valid duration.

507b. When a first TAT configuration parameter is not stored in the UE, the UE configures second TA valid duration with an infinite time length, where the currently stored third TA is valid in the second TA valid duration.

In step 506, the UE determines, based on the resume ID in the first indication information, a TA offset corresponding to the resume ID of the UE, and performs, based on the TA offset, offsetting on the basis of the TA (for example, the first TA or the second TA) currently stored in the UE, to obtain the updated third TA.

For example, the TA currently stored in the UE is 20 ms, and if TA offset in the first indication information is 10 ms, the UE may increase 20 ms by 10 ms. In other words, the updated third TA is 30 ms.

In addition, the radio access device may pre-deliver a TAT configuration parameter, for example, a first TAT configuration parameter to the UE, to indicate valid duration of the TA currently stored in the UE. In this way, in each uplink transmission process, the UE may start a TAT with corresponding timing duration based on the first TAT configuration parameter. The TA stored in the UE is valid only in a timing period of the TAT.

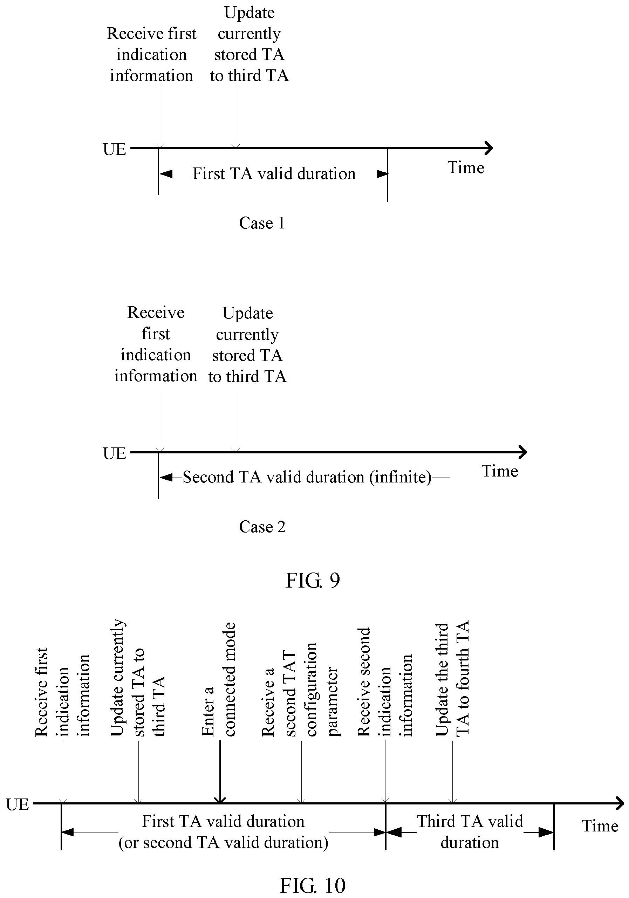

In this case, if the first TAT configuration parameter is currently stored in the UE, in step 507a, as shown in Case 1 in FIG. 9, the UE may configure the first TA valid duration based on the first TAT configuration parameter, for example, start a first TAT. In this way, the third TA currently stored in the UE is valid in a timing period of the first TAT.

If the first TAT configuration parameter is not currently stored in the UE, in step 507b, as shown in Case 2 in FIG. 9, the UE may configure second TA valid duration with an infinite time length, for example, start a second TAT with infinite timing duration. In this way, the third TA currently stored in the UE is valid in a timing period (namely, infinite duration) of the first TAT.

Further, if the UE configures the second TA valid duration with the infinite time length, once the UE exits the third mode, the UE may set that the second TA valid duration ends, that is, end the second TAT.

In addition, that the UE exits the third mode may include two cases: The UE exits the third mode and enters the idle mode, or the UE exits the third mode and enters the connected mode. This is not limited in this embodiment of the present invention.

When the UE exits the third mode and enters the connected mode, the UE may set up a connection to the first radio access device, or after cell reselection, may set up a connection to a second radio access device (namely, a radio access device in any cell other than a cell in which the first radio access device is located). In this case, regardless of whether the UE sets up a connection to the first radio access device or sets up a connection to the second radio access device, the UE may set that the second TA valid duration ends.

Certainly, when the second TA valid duration ends, the third TA is also invalid, because after the UE exits the third mode, the UE may obtain a new TA command and subsequently, the UE may update the currently stored third TA based on the new TA command.

508. When the third TA currently stored in the UE is valid, the UE sends a connection setup request to the first radio access device to set up a connection to the first radio access device.

In steps 506 and 507, the UE already updates the currently stored TA to the third TA and sets corresponding TA valid duration for the third TA. In this case, when the UE needs to set up a connection (for example, an RRC connection) to the first radio access device, although the UE is in the third mode, if the third TA is in the TA valid duration corresponding to the third TA, that is, the currently stored third TA is valid, the UE can directly send an RRC connection setup request to the first radio access device to set up the RRC connection to the first radio access device, without a need to initiate random access to the first radio access device, thereby reducing a probability of performing random access by the UE and reducing a conflict caused by simultaneously initiating random access by a plurality of UEs.

Optionally, when sending the connection setup request to the first radio access device, the UE may send the connection setup request by using a scheduling resource allocated by a base station to the UE, or send the connection setup request by using the grant-free resource. This is not limited in the embodiment of the present invention.

Further, after the UE sets up the connection to the first radio access device, that is, after the UE exits the third mode and enters the connected mode, the UE may not immediately end the first TA valid duration (or the second TA valid duration). As shown in FIG. 10, after the UE in the third mode sets the first TA valid duration (or the second TA valid duration), the UE sends the connection setup request to the first radio access device in the TA valid duration and sets up the connection to the first radio access device to enter the connected mode. Then, the first radio access device reconfigures a new TAT configuration parameter, for example, a second TAT configuration parameter for the UE based on a parameter such as a speed of the UE, and sends the second TAT configuration parameter to the UE.

Subsequently, the first radio access device may send second indication information (the second indication information includes a new TA command that is used to instruct the UE to update the currently stored third TA to fourth TA) to the UE. In this case, the UE may end the second TA valid duration. In addition, the UE may configure third TA valid duration in the connected mode based on the second TAT configuration parameter, and update the currently stored third TA to the fourth TA based on the second indication information. In this way, the fourth TA is valid in the third TA valid duration.

In this way, the second TA valid duration (or the first TA valid duration) does not end from a time when the UE exits the third mode to a time when the UE in the connected mode receives a new TA command. Therefore, if the UE needs to perform uplink transmission during this period of time, the UE may further implement the uplink transmission by using the second TA valid duration (or the first TA valid duration) configured for the UE in the third mode, thereby achieving continuous transmission of uplink data by the UE in different modes.

The foregoing mainly describes the solutions provided in the embodiments of the present invention from a perspective of interaction between network elements. It may be understood that, to implement the foregoing functions, the UE, the radio access device, and the like include a corresponding hardware structure and/or software module for performing the functions. A person skilled in the art should be easily aware that, with reference to the example units and algorithm steps described in the embodiments disclosed in this specification, the embodiments of the present invention can be implemented by hardware or a combination of hardware and computer software. Whether a function is implemented by hardware or hardware driven by computer software depends on particular applications and design constraints of the technical solutions. A person skilled in the art may use different methods to implement the described functions for each particular application, but it should not be considered that the implementation goes beyond the scope of the embodiments of the present invention.

In the embodiments of the present invention, function modules may be obtained through division performed on the UE, the radio access device, and the like based on the foregoing method examples. For example, the function modules may be obtained through division based on corresponding functions, or two or more functions may be integrated into one processing module. The integrated module may be implemented in a form of hardware, or may be implemented in a form of a software function module. It should be noted that, the module division in the embodiments of the present invention is an example and is merely a logical function division. In actual implementation, there may be another division manner.

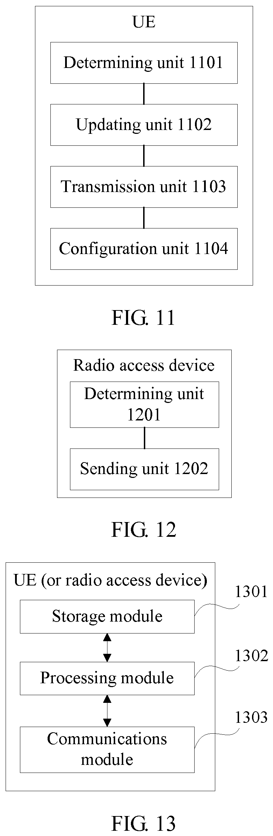

When the function modules are obtained through division based on corresponding functions, FIG. 11 is a possible schematic structural diagram of UE in the foregoing embodiments. The UE includes a determining unit 1101, an updating unit 1102, a transmission unit 1103, and a configuration unit 1104.

The determining unit 1101 is configured to support the UE in performing the processes 501 and 502 in FIG. 5. The updating unit 1102 is configured to support the UE in performing the processes 503 and 506 in FIG. 5. The transmission unit 1103 is configured to support the UE in performing the processes 504, 505, and 508 in FIG. 5. The configuration unit 1104 is configured to support the UE in performing the processes 507a and 507b in FIG. 5. All related content of the steps in the foregoing method embodiments can be cited in function descriptions of the corresponding function modules. Details are not described herein again.

When the function modules are obtained through division based on corresponding functions, FIG. 12 is a possible schematic structural diagram of a radio access device in the foregoing embodiments. The radio access device includes a determining unit 1201 and a sending unit 1202.

The determining unit 1201 is configured to determine first indication information for the UE. The first indication information is used to indicate a correspondence between an identifier of the UE and a TA offset, and a quantity of bits occupied by the TA offset is greater than or equal to 6. The sending unit 1202 is configured to send the first indication information to the UE.

The UE may be in a third mode (the third mode is any mode other than an idle mode and a connected mode), and the identifier of the UE is a third-mode identifier when the UE is in the third mode. The identifier of the UE is carried on a PDCCH, and the TA offset is carried on a PDSCH; or both the identifier of the UE and the TA offset are carried on a PDSCH.

Further, the sending unit 1202 is further configured to: send a TAT configuration parameter to the UE, where the TAT configuration parameter is used to instruct the UE to configure TA valid duration based on the TAT configuration parameter; and send second indication information to the UE, where the second indication information is used to instruct the UE to update stored TA, and the updated TA is valid in the TA valid duration.

Further, the sending unit 1202 is further configured to send candidate TA to the UE. The candidate TA is used to instruct the UE to perform uplink transmission on a grant-free resource by using the candidate TA when the TA stored in the UE is invalid.

When an integrated unit is used, FIG. 13 is a possible schematic structural diagram of UE (or a radio access device) in the foregoing embodiments. The UE (or the radio access device) includes a processing module 1302 and a communications module 1303. The processing module 1302 is configured to control and manage an action of the UE. The communications module 1303 is configured to support the UE in communication with another network entity. The UE (or the radio access device) may further include a storage module 1301, configured to store program code and data of the UE (or the radio access device).

The processing module 1302 may be a processor or a controller, such as a central processing unit (Central Processing Unit, CPU), a general purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logical device, a transistor logic device, a hardware component, or a combination thereof. The processing module 1302 may implement or execute various example logical blocks, modules, and circuits that are described with reference to content disclosed in the present invention. Alternatively, the processor may be a combination of processors implementing a computing function, for example, a combination of one or more microprocessors, or a combination of a DSP and a microprocessor. The communications module 1303 may be a transceiver, a transceiver circuit, a communications interface, or the like. The storage module 1301 may be a memory.

When the processing module 1302 is a processor, the communications module 1303 is an RF transceiver circuit, and the storage module 1301 is a memory, the UE provided in this embodiment of the present invention may be the UE shown in FIG. 3.

All or some of the foregoing embodiments may be implemented by software, hardware, firmware, or any combination thereof. When a software program is used to implement the embodiments, the embodiments may be completely or partially implemented in a form of a computer program product. The computer program product includes one or more computer instructions. When the computer program instruction is loaded and executed on a computer, the procedures or functions according to the embodiments of the present invention are completely or partially generated. The computer may be a general-purpose computer, a special-purpose computer, a computer network, or another programmable apparatus. The computer instruction may be stored in a computer readable storage medium or may be transmitted from one computer readable storage medium to another computer readable storage medium. For example, the computer instruction may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer readable storage medium may be any usable medium accessible by a computer, or a data storage device such as a server or a data center that integrates one or more available media. The available medium may be a magnetic medium (for example, a floppy disk, a hard disk, or a magnetic tape), an optical medium (for example, a DVD), a semiconductor medium (for example, a solid state disk Solid State Disk (SSD)), or the like.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An uplink transmission method, comprising:
determining, by user equipment UE, to perform uplink transmission by using a grant-free resource;
when first timing advance TA stored in the UE is invalid, updating, by the UE, the currently stored first TA to preset second TA; and
performing, by the UE, the uplink transmission on the grant-free resource by using the second TA.

2. The method according to claim 1, wherein the second TA is equal to 0.

3. The method according to claim 1 or 2, wherein the method further comprises:
when the first TA stored in the UE is valid, performing, by the UE, the uplink transmission on the grant-free resource by using the first TA; or
when the first TA stored in the UE is valid, performing, by the UE, the uplink transmission on the grant-free resource by using the second TA.

4. The method according to any one of claims 1 to 3, wherein the method further comprises:
receiving, by the UE, first indication information sent by a radio access device, wherein the first indication information is used to indicate a correspondence between an identifier of the UE and a TA offset, and a quantity of bits occupied by the TA offset is greater than or equal to 6; and
updating, by the UE, the currently stored second TA to the third TA based on the TA offset.

5. The method according to claim 4, wherein the UE is in a third mode, the third mode is any mode other than an idle mode and a connected mode, and
the identifier of the UE is a third-mode identifier when the UE is in the third mode.

6. The method according to claim 5, wherein
the identifier of the UE is carried on a physical downlink control channel PDCCH, and the TA offset is carried on a physical downlink shared channel PDSCH; or
both the identifier of the UE and the TA offset are carried on a PDSCH.

7. The method according to claim 5 or 6, wherein the method further comprises:
determining, by the UE, that a first timing advance timer TAT configuration parameter is currently stored, wherein the first TAT configuration parameter is used to indicate valid duration of currently stored TA; and
configuring, by the UE, first TA valid duration based on the first TAT configuration parameter, wherein the currently stored TA is valid in the first TA valid duration.

8. The method according to claim 5 or 6, wherein the method further comprises:
determining, by the UE, that a first TAT configuration parameter is not currently stored, wherein the first TAT configuration parameter is used to indicate valid duration of currently stored TA; and
configuring, by the UE, second TA valid duration with an infinite time length, wherein the currently stored TA is valid in the second TA valid duration.

9. The method according to claim 8, wherein the method further comprises:
when the UE exits the third mode, setting, by the UE, that the second TA valid duration ends.

10. The method according to any one of claims 5 to 9, wherein the method further comprises:
when TA stored in the UE is valid, sending, by the UE, a connection setup request to the radio access device instead of performing random access, wherein the connection setup request is used to request to set up a connection between the UE and the radio access device.

11. The method according to claim 10, wherein after the UE sends the connection setup request to the radio access device to set up a connection to the radio access device, the method further comprises:
receiving, by the UE, a second TAT configuration parameter that is configured by the radio access device for the UE;
receiving, by the UE, second indication information sent by the radio access device, wherein the second indication information is used to instruct the UE to update the currently stored TA to fourth TA; and
configuring, by the UE, third TA valid duration based on the second TAT configuration parameter, wherein the fourth TA is valid in the third TA valid duration.

12. An uplink transmission method, comprising:
determining, by a radio access device, first indication information for user equipment UE, wherein the first indication information is used to indicate a correspondence between an identifier of the UE and a timing advance TA offset, and a quantity of bits occupied by the TA offset is greater than or equal to 6; and
sending, by the radio access device, the first indication information to the UE.

13. The method according to claim 12, wherein the UE is in a third mode, the third mode is any mode other than an idle mode and a connected mode, and the identifier of the UE is a third-mode identifier when the UE is in the third mode; and
the identifier of the UE is carried on a physical downlink control channel PDCCH, and the TA offset is carried on a physical downlink shared channel PDSCH; or both the identifier of the UE and the TA offset are carried on a PDSCH.

14. The method according to claim 13, wherein after a connection between the radio access device and the UE is set up, the method further comprises:
sending, by the radio access device, a TAT configuration parameter to the UE, wherein the TAT configuration parameter is used to instruct the UE to configure TA valid duration based on the TAT configuration parameter; and
sending, by the radio access device, second indication information to the UE, wherein the second indication information is used to instruct the UE to update stored TA, and the updated TA is valid in the TA valid duration.

15. The method according to claims 12 to 14, wherein the method further comprises:
sending, by the radio access device, candidate TA to the UE, wherein the candidate TA is used to instruct the UE to perform uplink transmission on a grant-free resource by using the candidate TA when the TA stored in the UE is invalid.

16. User equipment UE, comprising:
a determining unit, configured to determine to perform uplink transmission by using a grant-free resource;
an updating unit, configured to: when first timing advance TA stored in the UE is invalid, update the currently stored first TA to preset second TA; and
a transmission unit, configured to perform the uplink transmission on the grant-free resource by using the second TA.

17. The UE according to claim 16, wherein
the transmission unit is further configured to: when the first TA stored in the UE is valid, perform the uplink transmission on the grant-free resource by using the first TA; or when the first TA stored in the UE is valid, perform the uplink transmission on the grant-free resource by using the second TA.

18. The UE according to claim 16 or 17, wherein
the transmission unit is further configured to receive first indication information sent by a radio access device, wherein the first indication information is used to indicate a correspondence between an identifier of the UE and a TA offset, and a quantity of bits occupied by the TA offset is greater than or equal to 6; and
the updating unit is further configured to update the currently stored second TA to the third TA based on the TA offset.

19. The UE according to claim 18, wherein the UE is in a third mode, the third mode is any mode other than an idle mode and a connected mode, and the identifier of the UE is a third-mode identifier when the UE is in the third mode; and
the identifier of the UE is carried on a PDCCH, and the TA offset is carried on a PDSCH; or both the identifier of the UE and the TA offset are carried on a PDSCH.

20. The UE according to claim 19, wherein the UE further comprises a configuration unit, wherein
the determining unit is further configured to determine that a first TAT configuration parameter is currently stored, wherein the first TAT configuration parameter is used to indicate valid duration of currently stored TA; and
the configuration unit is configured to configure first TA valid duration based on the first TAT configuration parameter, wherein the currently stored TA is valid in the first TAT valid duration.

21. The UE according to claim 19, wherein the UE further comprises a configuration unit, wherein
the determining unit is further configured to determine that a first TAT configuration parameter is not currently stored, wherein the first TAT configuration parameter is used to indicate valid duration of currently stored TA; and
the configuration unit is configured to configure second TA valid duration with an infinite time length, wherein the currently stored TA is valid in the second TA valid duration.

22. The UE according to claim 21, wherein
the configuration unit is further configured to: when the UE exits the third mode, set that the second TA valid duration ends.

23. The UE according to any one of claims 19 to 22, wherein
the transmission unit is further configured to: when TA stored in the UE is valid, send a connection setup request to the radio access device instead of performing random access, wherein the connection setup request is used to request to set up a connection between the UE and the radio access device.

24. The UE according to claim 23, wherein
the transmission unit is further configured to: receive a second TAT configuration parameter that is configured by the radio access device for the UE, and receive second indication information sent by the radio access device, wherein the second indication information is used to instruct the UE to update the currently stored TA to fourth TA; and
the updating unit is further configured to configure third TA valid duration based on the second TAT configuration parameter, wherein the fourth TA is valid in the third TA valid duration.

25. A radio access device, comprising:
a determining unit, configured to determine first indication information for user equipment UE, wherein the first indication information is used to indicate a correspondence between an identifier of the UE and a timing advance TA offset, and a quantity of bits occupied by the TA offset is greater than or equal to 6; and
a sending unit, configured to send the first indication information to the UE.

26. The radio access device according to claim 25, wherein the UE is in a third mode, the third mode is any mode other than an idle mode and a connected mode, and the identifier of the UE is a third-mode identifier when the UE is in the third mode; and
the identifier of the UE is carried on a physical downlink control channel PDCCH, and the TA offset is carried on a physical downlink shared channel PDSCH; or both the identifier of the UE and the TA offset are carried on a PDSCH.

27. The radio access device according to claim 26, wherein
the sending unit is further configured to: send a TAT configuration parameter to the UE, wherein the TAT configuration parameter is used to instruct the UE to configure TA valid duration based on the TAT configuration parameter; and send second indication information to the UE, wherein the second indication information is used to instruct the UE to update stored TA, and the updated TA is valid in the TA valid duration.

28. The radio access device according to any one of claims 25 to 27, wherein
the sending unit is further configured to send candidate TA to the UE, wherein the candidate TA is used to instruct the UE to use the candidate TA to perform uplink transmission on a grant-free resource when the TA stored in the UE is invalid.

29. User equipment UE, comprising a processor, a memory, a bus, and a communications interface, wherein
the memory is configured to store a computer executable instruction, the processor is connected to the memory by using the bus, and when the UE runs, the processor executes the computer executable instruction stored in the memory, so that the UE performs the uplink transmission method according to any one of claims 1 to 11.

30. A radio access device, comprising a processor, a memory, a bus, and a communications interface, wherein
the memory is configured to store a computer executable instruction, the processor is connected to the memory by using the bus, and when the radio access device runs, the processor executes the computer executable instruction stored in the memory, so that the radio access device performs the uplink transmission method according to any one of claims 12 to 15.

31. A computer readable storage medium, wherein the computer readable storage medium stores an instruction, and when the instruction runs on the user equipment UE according to any one of claims 16 to 24, the UE performs the uplink transmission method according to any one of claims 1 to 11.

32. A computer readable storage medium, wherein the computer readable storage medium stores an instruction, and when the instruction runs on the radio access device according to any one of claims 25 to 28, the radio access device performs the uplink transmission method according to any one of claims 12 to 15.

33. A computer program product comprising an instruction, wherein when the computer program product runs on the user equipment UE according to any one of claims 16 to 24, the UE performs the uplink transmission method according to any one of claims 1 to 11.

34. A computer program product comprising an instruction, wherein when the computer program product runs on the radio access device according to any one of claims 25 to 28, the radio access device performs the uplink transmission method according to any one of claims 12 to 15.
